# EUROPEAN PATENT APPLICATION

(11) **EP 4 686 387 A1**
(43) Date of publication of application: **04.02.2026**
(21) Application number: 24217334.2
(22) Date of filing: 04.12.2024
(51) Int. Cl.: A01D 34/00, A01D 43/00, A01D 34/416, A01D 34/78

(54) **STAND-ON MOWER**

(30) Priority: 30.07.2024 CN 202411040527; 30.07.2024 CN 202411037251
(71) Applicant: Nanjing Chervon Industry Co., Ltd., Nanjing, Jiangsu 211106 (CN)
(72) Inventor: SHEN, Xinming, Nanjing, Jiangsu 211106, (CN); WEI, Tianfang, Nanjing, Jiangsu 211106, (CN); LIU, Runze, Nanjing, Jiangsu 211106, (CN)
(74) Representative: Sun, Yiming

(57) **Abstract**

Provided is a stand-on mower. The stand-on mower includes a body, a carrier, a walking assembly, a cutting assembly, and an accessory storage portion. The carrier is used for carrying a user and disposed at the rear end of the body. The user can get on or off the mower from the rear end of the body. The walking assembly includes walking wheels. The walking wheels support the body and are used for driving the stand-on mower to walk. The cutting assembly includes a mowing element for mowing grass. The cutting assembly is mounted to the body. A first accessory storage portion and a second accessory storage portion are disposed on the left side of the body and the right side of the body, respectively and do not affect an operator in getting on or off the mower.

## Description

### RELATED APPLICATION INFORMATION

This application claims priority to Chinese Patent Applications No. 202411040527.7 and No. 202411037251.7, both filed with the China National Intellectual Property Administration (CNIPA) on Jul. 30, 2024, the disclosure of which are incorporated herein by reference in its entirety.

### TECHNICAL FIELD

The present application relates to a mower and, in particular, to a stand-on mower.

### BACKGROUND

A riding mower in the related art, as a drivable individual miniature engineering machine, is used for mowing lawns, vegetation, and the like. A riding mower has a relatively large volume and can mow a relatively expansive lawn area. However, an operator typically uses a handheld string trimmer to mow grass in a relatively confined corner area. In addition, after mowing the grass, the operator typically uses a blower to remove clippings on the lawn. Therefore, most existing riding mowers have the function of carrying a string trimmer and a blower. The string trimmer and the blower are typically disposed on two sides of a seat and affect the operator in getting on or off the mower.

This part provides background information related to the present application, and the background information is not necessarily the existing art.

### SUMMARY

An object of the present application is to solve or at least alleviate part or all of the preceding problems. Therefore, an object of the present application is to provide a stand-on mower and a riding mower.

To achieve the preceding object, the present application adopts the technical solutions below.

A stand-on mower includes: a body; a carrier used for carrying a user and disposed at the rear end of the body; a walking assembly including walking wheels, where the walking wheels support the body and are used for driving the stand-on mower to walk; a cutting assembly including a mowing element for mowing grass, where the cutting assembly is mounted to the body; and a first accessory storage portion and a second accessory storage portion, where the first accessory storage portion and the second accessory storage portion are disposed on the left side of the body and the right side of the body, respectively, the first accessory storage portion and the second accessory storage portion have different structures, the first accessory storage portion is used for storing a first outdoor tool, and the second accessory storage portion is used for storing a second outdoor tool different from the first outdoor tool.

In some examples, the first outdoor tool and the second outdoor tool are each disposed along a front and rear direction, a battery pack of the first outdoor tool and/or a battery pack of the second outdoor tool are located at the rear of the first outdoor tool and/or the rear of the second outdoor tool, and a working head of the first outdoor tool and/or a working head of the second outdoor tool are located at the front of the first outdoor tool and/or the front of the second outdoor tool.

In some examples, the length of the first outdoor tool is greater than or equal to 70 cm; and/or the length of the second outdoor tool is greater than or equal to 70 cm.

In some examples, the first outdoor tool is a blower, a pruner, or a light.

In some examples, the second outdoor tool is a string trimmer or a pole saw.

In some examples, the first outdoor tool is operable by the user to enter or exit a working state; and/or the second outdoor tool is operable by the user to enter or exit a working state.

In some examples, the length of the longest component among components of the first accessory storage portion is less than or equal to 30 cm; and/or the length of the longest component among components of the second accessory storage portion is less than or equal to 30 cm.

In some examples, the first accessory storage portion is detachably connected to the body; and/or the second accessory storage portion is detachably connected to the body.

In some examples, the stand-on mower further includes a power supply interface, where the power supply interface is configured to supply power to the first outdoor tool and/or the second outdoor tool.

In some examples, the stand-on mower includes a battery compartment for accommodating a battery pack, where the battery pack is detachably connected to the battery compartment, and the battery pack is capable of supplying power to the first outdoor tool and/or the second outdoor tool after being detached.

A riding mower includes: a body; a carrier used for carrying a user; a walking assembly including walking wheels, where the walking wheels support the body and are used for driving the riding mower to walk; a cutting assembly including a mowing element for mowing grass, where the cutting assembly is mounted to the body; and an accessory storage portion for storing an outdoor tool, where when the outdoor tool is mounted to the accessory storage portion and the user is on the carrier, the outdoor tool is operable by the user to enter or exit a working state.

In some examples, the accessory storage portion is disposed on a side surface of the riding mower.

In some examples, the included angle between the accessory storage portion and the body is adjustable to change a working angle of the outdoor tool.

In some examples, the accessory storage portion is used for storing a first outdoor tool and/or a second outdoor tool different from the first outdoor tool.

In some examples, the outdoor tool is a blower, a pruner, or a light.

In some examples, the outdoor tool is operable by the user to change a working parameter.

In some examples, the length of the longest component among components of the accessory storage portion is less than or equal to 30 cm.

In some examples, the riding mower further includes a power supply interface, where the power supply interface is configured to supply power to the outdoor tool.

In some examples, the riding mower includes a battery compartment for accommodating a battery pack, where the battery pack is detachably connected to the battery compartment, and the battery pack is capable of supplying power to the outdoor tool after being detached.

In some examples, the accessory storage portion is detachably connected to the body.

A riding mower includes: a body; a carrier used for carrying a user; a walking assembly including walking wheels, where the walking wheels support the body and are used for driving the riding mower to walk; a cutting assembly including a mowing element for mowing grass, where the cutting assembly is mounted to the body; and an accessory storage portion for storing an outdoor tool, where the accessory storage portion includes a biasing device, and the biasing device limits the position of the outdoor tool when the outdoor tool is mounted to the accessory storage portion.

In some examples, the biasing device includes a handle and a spring, where the outdoor tool pushes the handle in the process where the outdoor tool is mounted to the accessory storage portion, and the spring drives the handle to return to the original position of the handle after the outdoor tool is mounted in place.

In some examples, the outdoor tool pushes the handle in the process where the outdoor tool is fetched from the accessory storage portion, and the spring drives the handle to return to the original position of the handle after the outdoor tool is fetched out.

In some examples, the accessory storage portion includes at least two fixing positions, the fixing positions are spaced apart along a front and rear direction of the riding mower, and the fixing positions are used for supporting the outdoor tool.

In some examples, the outdoor tool is a pole tool.

In some examples, the length of the longest component among components of the accessory storage portion is less than or equal to 30 cm.

In some examples, two accessory storage portions are provided, and a respective one of the two accessory storage portions is disposed on each of the left side of the body and the right side of the body.

In some examples, the two accessory storage portions have different structures and are used for storing different outdoor tools.

In some examples, the outdoor tool is operable by the user to enter or exit a working state.

In some examples, the riding mower is a stand-on mower, and the carrier is disposed at the rear end of the body.

The present application has the following benefit: the carrier of the stand-on mower is disposed at the rear end of the body so the user can get on or off the mower from the rear end of the body, the first accessory storage portion and the second accessory storage portion are disposed on the left side of the body and the right side of the body, respectively, and the positions where the first accessory storage portion and the second accessory storage portion are disposed do not affect an operator in getting on or off the mower.

A riding mower includes: a body; a seat for a user to sit on; a walking assembly including walking wheels, where the walking wheels support the body and are used for driving the riding mower to walk; a cutting assembly including a mowing element for mowing grass, where the cutting assembly is mounted to the body; and a first accessory storage portion and a second accessory storage portion, where the first accessory storage portion and the second accessory storage portion are disposed on the same side of the body, the first accessory storage portion is used for storing a first outdoor tool, the second accessory storage portion is used for storing a second outdoor tool, and the first outdoor tool is stored above the second outdoor tool.

In some examples, the first outdoor tool is a blower, a pruner, or a light.

In some examples, the second outdoor tool is a string trimmer or a pole saw.

In some examples, the first outdoor tool and the second outdoor tool are each disposed along a front and rear direction, a battery pack of the first outdoor tool and/or a battery pack of the second outdoor tool are located at the rear of the first outdoor tool and/or the rear of the second outdoor tool, and a working head of the first outdoor tool and/or a working head of the second outdoor tool are located at the front of the first outdoor tool and/or the front of the second outdoor tool.

In some examples, a rollover protection structure is disposed behind the seat, and the first accessory storage portion is fixedly mounted to the rollover protection structure.

In some examples, the first accessory storage portion includes a hook, a hanging ring, or a latch.

In some examples, the second accessory storage portion includes at least two fixing positions, the fixing positions are spaced apart along a front and rear direction of the riding mower, and the fixing positions are used for supporting the second outdoor tool.

In some examples, the first accessory storage portion is detachably connected to the body; and/or the second accessory storage portion is detachably connected to the body.

In some examples, the first accessory storage portion and the second accessory storage portion are disposed on the left side of the riding mower or the right side of the riding mower.

In some examples, the riding mower includes a battery compartment for accommodating a battery pack, where the battery pack is detachably connected to the battery compartment, and the battery pack is capable of supplying power to the first outdoor tool and/or the second outdoor tool after being detached.

A riding mower includes: a body; a seat for a user to sit on; a rollover protection structure disposed behind the seat; a walking assembly including walking wheels, where the walking wheels support the body and are used for driving the riding mower to walk; a cutting assembly including a mowing element for mowing grass, where the cutting assembly is mounted to the body; and a first accessory storage portion for storing a first outdoor tool, where the first accessory storage portion includes a portion for fixation to a whole machine and an accessory mounting portion, and the portion for the fixation to the whole machine is fixedly mounted to the rollover protection structure.

In some examples, the portion for the fixation to the whole machine includes two clamping plates clamping the rollover protection structure, and the clamping plates are detachably connected to the rollover protection structure through locking members.

In some examples, the first accessory storage portion includes two accessory mounting portions for storing a handheld blower and a backpack blower, respectively.

In some examples, the first accessory storage portion includes a hook, a hanging ring, or a latch.

In some examples, the first outdoor tool is a blower, a pruner, or a light.

In some examples, the first outdoor tool is disposed along a front and rear direction, a battery pack of the first outdoor tool is located at the rear of the first outdoor tool, and a working head of the first outdoor tool is located at the front of the first outdoor tool.

In some examples, the riding mower includes a battery compartment for accommodating a battery pack, where the battery pack is detachably connected to the battery compartment, and the battery pack is capable of supplying power to the first outdoor tool after being detached.

In some examples, the riding mower further includes a second accessory storage portion for storing a second outdoor tool, and the first outdoor tool is stored above the second outdoor tool.

In some examples, the first outdoor tool is different from the second outdoor tool.

In some examples, the second outdoor tool is a string trimmer or a pole saw.

The present application has the following benefit: the first accessory storage portion and the second accessory storage portion are disposed on the same side of the body and an operator can get on or off the mower from the other side so that the positions where the first accessory storage portion and the second accessory storage portion are disposed do not affect the operator in getting on or off the mower.

### BRIEF DESCRIPTION OF DRAWINGS

FIG. 1 is a structural view of a riding mower according to the present application;
FIG. 2 is a side view of a riding mower according to the present application;
FIG. 3 is a rear view of a riding mower according to the present application;
FIG. 4 is a structural view of a first accessory storage portion according to the present application;
FIG. 5 is schematic view one of a partial structure of a second accessory storage portion according to the present application;
FIG. 6 is schematic view two of a partial structure of a second accessory storage portion according to the present application;
FIG. 7 is schematic view three of a partial structure of a second accessory storage portion according to the present application;
FIG. 8 is schematic view four of a partial structure of a second accessory storage portion according to the present application;
FIG. 9 is schematic view five of a partial structure of a second accessory storage portion according to the present application;
FIG. 10 is structural view one of another riding mower according to the present application;
FIG. 11 is structural view two of another riding mower according to the present application;
FIG. 12 is a side view of another riding mower according to the present application;
FIG. 13 is a rear view of another riding mower according to the present application;
FIG. 14 is a structural view of another first accessory storage portion according to the present application;
FIG. 15 is schematic view one of a partial structure of another second accessory storage portion according to the present application; and
FIG. 16 is schematic view two of a partial structure of another second accessory storage portion according to the present application.

### Reference list

- 110: body
- 120: carrier
- 130: walking assembly
- 131: walking wheel
- 140: cutting assembly
- 141: mowing element
- 150: accessory storage portion
- 151: first accessory storage portion
- 1511: first connecting portion
- 1512: first hanging ring
- 1513: first clamping portion
- 1514: portion for fixation to a whole machine
- 15141: clamping plate
- 15142: support column
- 1515: accessory mounting portion
- 15151: accessory receiving plate
- 15152: first locking strap
- 15153: accessory connecting plate
- 15154: second locking strap
- 152: second accessory storage portion
- 1521: first support assembly
- 15211: first support frame
- 15212: first hook
- 1522: second support assembly
- 15221: second support frame
- 15222: second hook
- 1523: limiting member
- 1524: biasing device
- 15241: handle
- 15242: spring
- 1525: first connecting assembly
- 15251: first connecting frame
- 15252: first positioning member
- 1526: second connecting assembly
- 15261: second connecting frame
- 15262: second positioning member
- 15263: limiting plate
- 160: rollover protection structure
- 210: first outdoor tool
- 220: second outdoor tool

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

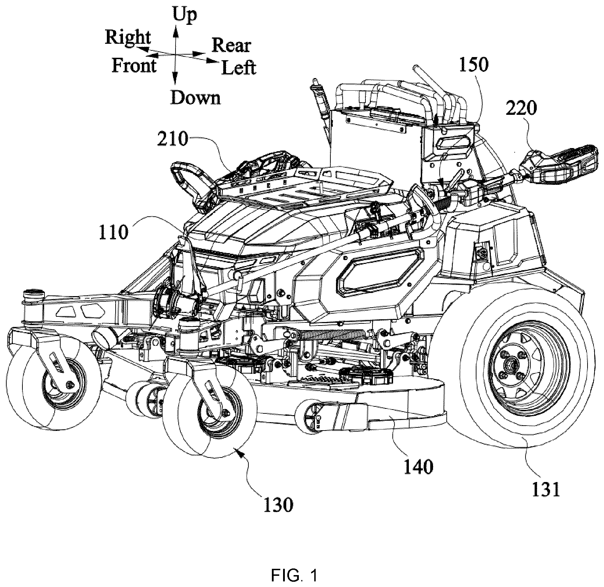

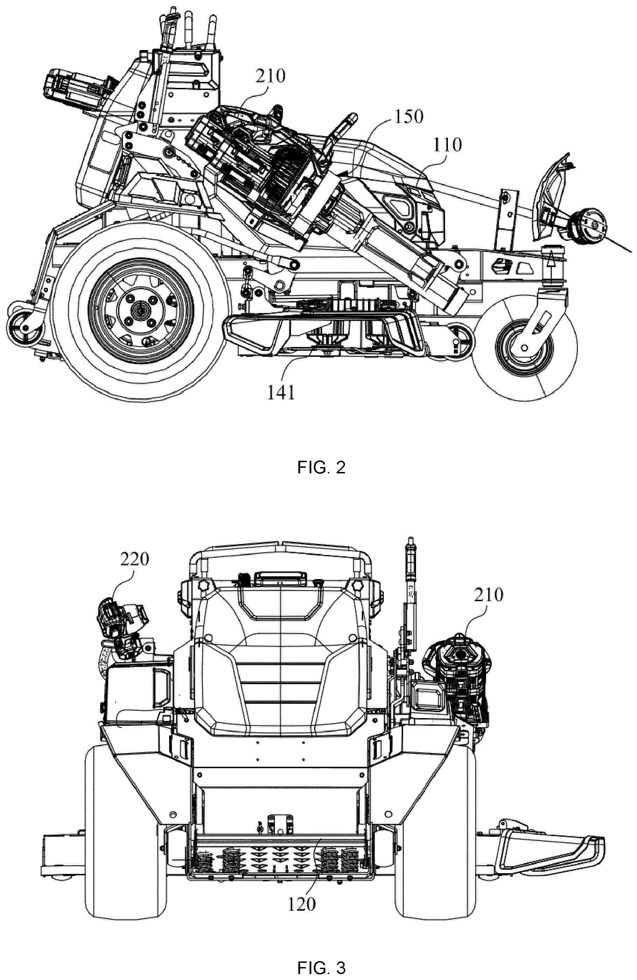

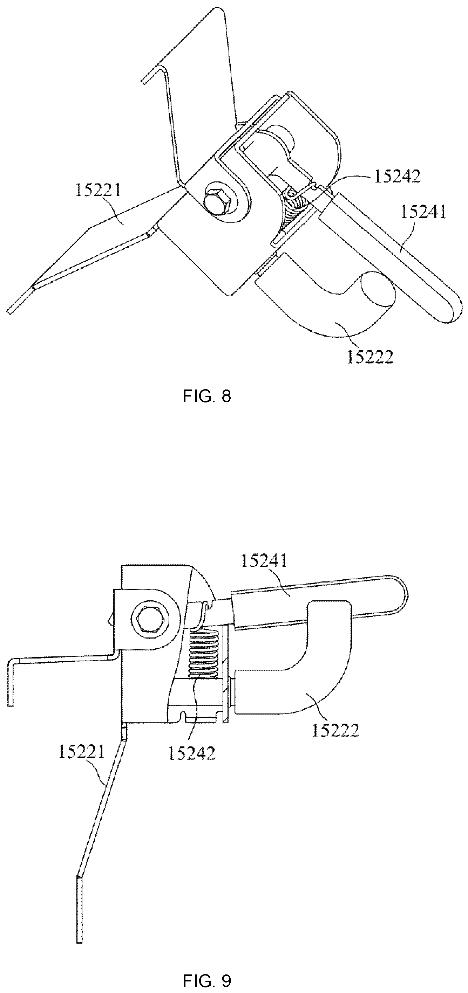

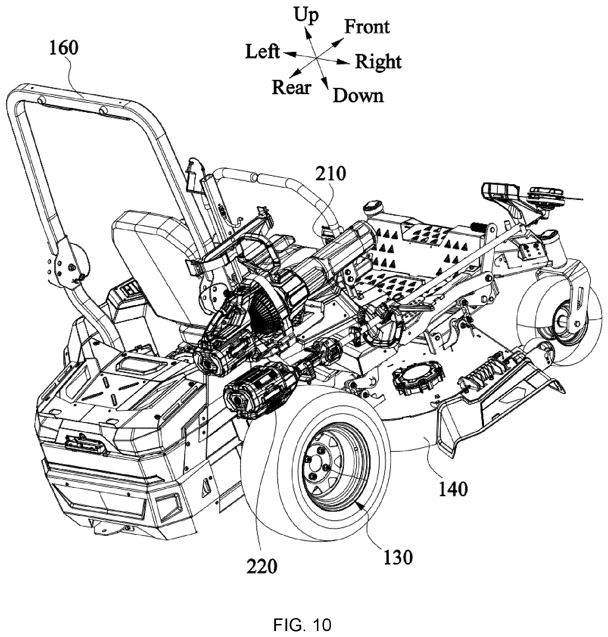

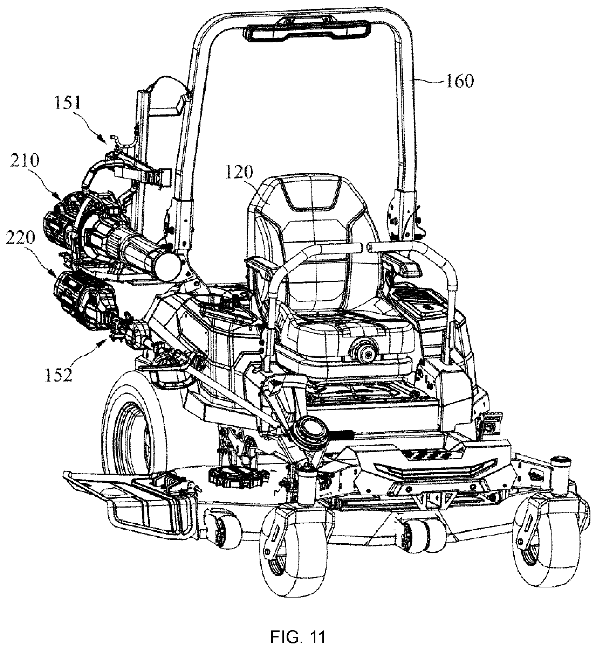

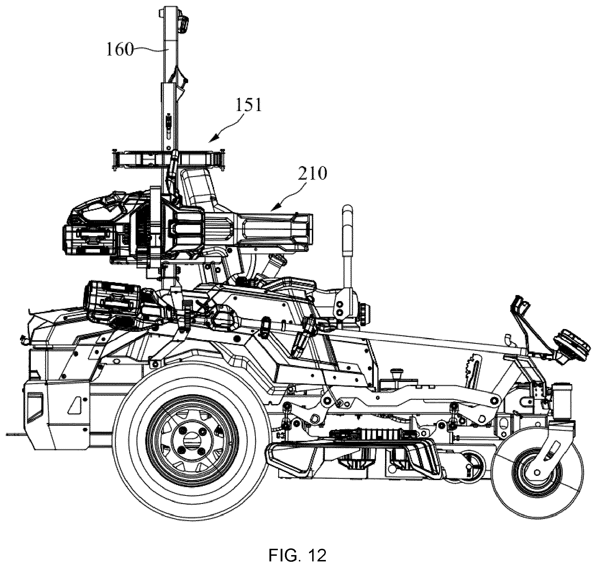

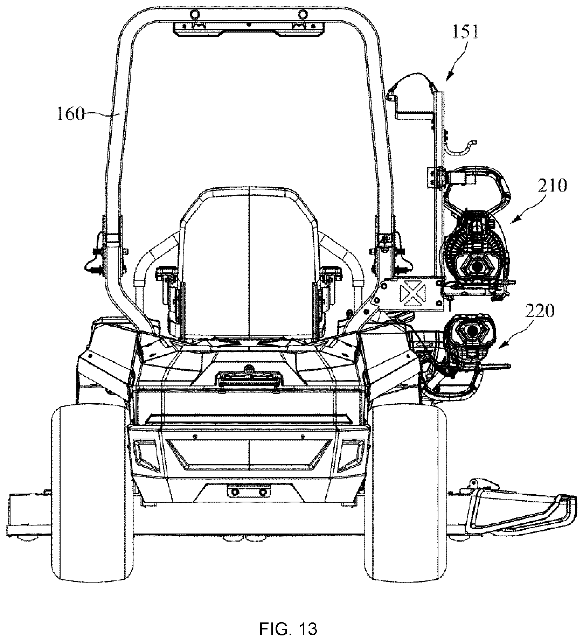

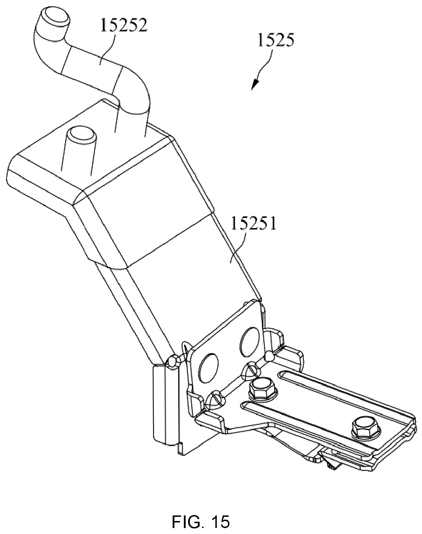

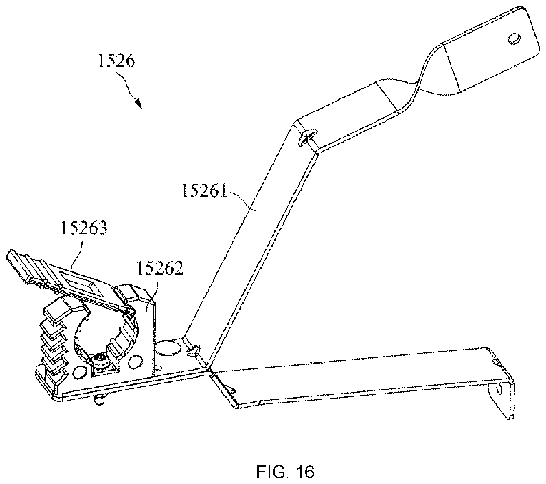

Referring to FIGS. 1 to 16, the present application provides a riding mower. The riding mower includes a body 110, a carrier 120, a walking assembly 130, and a cutting assembly 140. The carrier 120 is used for carrying a user. The user is on the carrier 120 to operate the riding mower. In some examples, as shown in FIGS. 1 to 3, the riding mower is a stand-on mower. The carrier 120 is a platform. The carrier 120 is disposed at the rear end of the body 110. The user stands on the platform to operate the riding mower. In some examples, as shown in FIGS. 10 to 13, the riding mower is a mower with a seat. The carrier 120 is the seat for the user to sit on. The user sits on the seat to operate the riding mower.

The body 110 is the main structure of the riding mower. The carrier 120 is disposed on the body 110, and the body 110 is used for supporting the carrier 120. In some examples, the body 110 includes a frame structure formed by plates, rods, and the like that are connected to each other. In some examples, the body 110 is a housing structure. Multiple components are disposed in the housing.

The walking assembly 130 includes walking wheels 131. The walking wheels 131 support the body 110 and are used for driving the mower to walk. The walking wheels 131 are driven by a walking motor. The walking motor is mounted in the body 110. In some examples, the walking wheels 131 include front wheels and rear wheels. The front wheels are rotatably connected to the front portion of the body 110, and the rear wheels are rotatably connected to the rear portion of the body 110. In a specific example, two front wheels are provided, that is, the left front wheel and the right front wheel, and two rear wheels are provided, that is, the left rear wheel and the right rear wheel. In some examples, the mower is driven in a rear drive manner. A transmission mechanism is drivingly connected to the rear wheels and the walking motor. The structure of the transmission mechanism is the existing art and is not described in detail here.

The cutting assembly 140 includes a mowing element 141 for mowing grass. The cutting assembly 140 is mounted to the body 110. The cutting assembly 140 may be mounted to the bottom of the body 110. A cutting motor may be disposed in the body 110 and is configured to drive the mowing element 141 to perform a cutting task. In some examples, the mowing element 141 includes an elongated cutting blade. The motor shaft of the cutting motor is connected to one end of the cutting blade directly or through a transmission shaft. Under the drive of the cutting motor, the cutting blade is rotatable about a vertical axis to mow grass. In a specific example, multiple cutting blades are provided. The multiple cutting blades are spaced apart around the axis of the motor shaft. Under the drive of the cutting motor, the multiple cutting blades can operate simultaneously to mow grass.

The riding mower further includes an accessory storage portion 150 for storing an outdoor tool. The accessory storage portion 150 may store one type of outdoor tools or two or more types of outdoor tools. In some examples, the accessory storage portion 150 is used for storing a first outdoor tool 210 and/or a second outdoor tool 220 different from the first outdoor tool 210.

One accessory storage portion 150 may have one storage space or two or more storage spaces. One outdoor tool can be stored in each storage space. In some examples, one accessory storage portion 150 has two storage spaces and can store both a blower and a string trimmer.

One accessory storage portion 150 may be provided, or two or more accessory storage portions 150 may be provided. Each accessory storage portion 150 can store one outdoor tool. In some examples, two accessory storage portions 150 are provided and can store both a blower and a string trimmer.

Exemplarily, the riding mower includes a first accessory storage portion 151 and a second accessory storage portion 152. The first accessory storage portion 151 is used for storing the first outdoor tool 210, and the second accessory storage portion 152 is used for storing the second outdoor tool 220. The first outdoor tool 210 and the second outdoor tool 220 may be the same or different. Exemplarily, the first outdoor tool 210 is different from the second outdoor tool 220. Therefore, the first accessory storage portion 151 and the second accessory storage portion 152 can store two types of outdoor tools.

The outdoor tools may be pole tools or any other required tools. The outdoor tools may include a blower, a pruner, a light, a string trimmer, or a pole saw. In some examples, the first outdoor tool 210 is a blower, a pruner, or a light, and the second outdoor tool 220 is a string trimmer or a pole saw.

The accessory storage portion 150 is disposed on a side surface of the riding mower so that it is convenient for an operator to fetch, store, and use the outdoor tool. When two accessory storage portions 150 are provided, a respective one of the two accessory storage portions 150 may be disposed on each of the left side of the body 110 and the right side of the body 110, or the two accessory storage portions 150 may be located on one side of the body 110.

In an example, as shown in FIGS. 1 to 3, the carrier 120 of the stand-on mower is disposed at the rear end of the body 110 so the user can get on or off the mower from the rear end of the body 110. The first accessory storage portion 151 and the second accessory storage portion 152 are disposed on the left side of the body 110 and the right side of the body 110, respectively. The positions where the first accessory storage portion 151 and the second accessory storage portion 152 are disposed do not affect the operator in getting on or off the mower. In other examples, for the stand-on mower, the first accessory storage portion 151 and the second accessory storage portion 152 may be disposed on the same side of the body 110.

In another example, as shown in FIGS. 10 to 13, the carrier 120 of the riding mower is disposed at the rear middle portion of the body 110 so the user needs to get on or off the mower from the left side of the carrier 120 or the right side of the carrier 120. The first accessory storage portion 151 and the second accessory storage portion 152 are disposed on the same side of the body 110 and the operator can get on or off the mower from the other side so that the positions where the first accessory storage portion 151 and the second accessory storage portion 152 are disposed do not affect the operator in getting on or off the mower. The first accessory storage portion 151 and the second accessory storage portion 152 are disposed on the left side of the riding mower or the right side of the riding mower.

The first accessory storage portion 151 may be located above the second accessory storage portion 152 so that the first outdoor tool 210 is stored above the second outdoor tool 220. Alternatively, the second accessory storage portion 152 may be located above the first accessory storage portion 151 so that the second outdoor tool 220 is stored above the first outdoor tool 210.

The outdoor tools are arranged along a front and rear direction, thereby making full use of space. For each outdoor tool of the outdoor tools, the battery pack is located at the rear of the outdoor tool and the working head is located at the front of the outdoor tool so that the outdoor tool remains stable and balanced. Both the first outdoor tool 210 and the second outdoor tool 220 are arranged along the front and rear direction. The battery packs of the first outdoor tool 210 and the second outdoor tool 220 are located at the rears of the first outdoor tool 210 and the second outdoor tool 220. The working heads of the first outdoor tool 210 and the second outdoor tool 220 are located at the fronts of the first outdoor tool 210 and the second outdoor tool 220.

The outdoor tools are placed transversely, which may be parallel to a horizontal direction or may form included angles with a horizontal direction. Exemplarily, the outdoor tools are inclined along the front and rear direction. The front ends of the outdoor tools are downward and the rear ends of the outdoor tools are upward, thereby enhancing the stability of the outdoor tools. The inclination angles of the outdoor tools may be set according to actual requirements.

Due to the preceding configurations, even if the outdoor tools are relatively long, the outdoor tools can be stored approximately along the front and rear direction without affecting the user in getting on and off the mower. In an example, the length of the outdoor tool is greater than or equal to 70 cm. Specifically, the length of the first outdoor tool 210 is greater than or equal to 70 cm; and/or the length of the second outdoor tool 220 is greater than or equal to 70 cm. In an example, the length of the outdoor tool is greater than or equal to 80 cm. In an example, the length of the outdoor tool is greater than or equal to 90 cm.

The riding mower further includes a power supply interface, where the power supply interface is configured to supply power to the outdoor tool. When the electric quantity of the battery pack carried by the outdoor tool is insufficient, the power supply interface of the riding mower may be configured to supply power to the outdoor tool. The power supply interface may supply power to the first outdoor tool 210 or the second outdoor tool 220.

The riding mower includes a battery compartment for accommodating a battery pack. The battery pack is detachably connected to the battery compartment. The battery pack can supply power to the outdoor tool after being detached. When the electric quantity of the battery pack carried by the outdoor tool is insufficient, the battery pack of the riding mower may be configured to supply power to the outdoor tool. The battery pack may supply power to the first outdoor tool 210 or the second outdoor tool 220.

For some outdoor tools, since the handles of the outdoor tools face or are relatively close to the carrier 120, these outdoor tools are operable by the user to enter or exit working states, for example, a blower, a pruner, or a light. Specifically, the user may operate switches of the outdoor tools to start or stop the outdoor tools. The switches may be press switches, toggle switches, or push switches, which are not limited here. The user may operate the outdoor tool on the carrier 120, may operate the outdoor tool after getting off the mower, may operate the outdoor tool in the accessory storage portion 150, or may fetch the outdoor tool from the accessory storage portion 150 and then operate the outdoor tool.

In some examples, when the outdoor tool is mounted to the accessory storage portion 150 and the user is on the carrier 120, the outdoor tool is operable by the user to enter or exit a working state. The operator can operate the outdoor tool without getting off the mower so that the operation is convenient.

Both the first outdoor tool 210 and the second outdoor tool 220 are operable by the user to enter or exit working states. For the stand-on mower, the first accessory storage portion 151 and the second accessory storage portion 152 are disposed on the left side of the body 110 and the right side of the body 110, respectively. The user may stand on the carrier 120 at the rear end of the body 110 to operate the first outdoor tool 210 and the second outdoor tool 220 that are distributed on the left side and the right side. For the riding mower, the first accessory storage portion 151 and the second accessory storage portion 152 are disposed on the right side of the body 110, and the user may get on or off the mower from the left side. The user sits on the seat to operate the first outdoor tool 210 and the second outdoor tool 220 on the right side.

The outdoor tool is operable by the user to change a working parameter. For example, the user changes the speed, air volume, or brightness of the outdoor tool. Additionally, the user may lock or unlock the outdoor tool. In this manner, without getting off the mower, in other words, in the process where the riding mower moves, the user can work with the outdoor tool to perform operations such as a blow, illumination, or even trimming branches. The user may perform these operations and mow grass simultaneously. Alternatively, these operations may be performed alone. Thus, the work efficiency of the user can be improved effectively.

The accessory storage portion 150 may be connected to the body 110, the carrier 120, or another component of the riding mower. The accessory storage portion 150 is detachable so that it is convenient to mount, detach, or replace the accessory storage portion 150. In some examples, the accessory storage portion 150 is detachably connected to the body 110. Exemplarily, the first accessory storage portion 151 is detachably connected to the body 110; and/or the second accessory storage portion 152 is detachably connected to the body 110.

The included angle between the accessory storage portion 150 and the body 110 is adjustable to change a working angle of the outdoor tool. The accessory storage portion 150 may be rotatably connected to the body 110 and may be locked through a locking member after rotating to a desired position. Alternatively, the accessory storage portion 150 may be driven to rotate by a drive mechanism. The drive mechanism has a locking function and can lock the accessory storage portion 150 in a desired position.

When two accessory storage portions 150 are provided, the two accessory storage portions 150 may have the same structure or may have different structures to store different outdoor tools. In some examples, the accessory storage portion 150 includes at least two fixing positions, the fixing positions are spaced apart along the front and rear direction of the riding mower, and the fixing positions are used for supporting the outdoor tool. The outdoor tool is supported through the at least two fixing positions so that the position of the outdoor tool is stable. In some examples, the accessory storage portion 150 includes a hook, a hanging ring, or a latch.

In some examples, the accessory storage portion 150 includes a biasing device 1524. The biasing device 1524 limits the position of the outdoor tool when the outdoor tool is mounted to the accessory storage portion 150. The position of the outdoor tool is limited through the biasing device 1524 so that the outdoor tool is stably positioned.

The structure of the first accessory storage portion 151 and the structure of the second accessory storage portion 152 are different to be adapted to different outdoor tools. For example, the first accessory storage portion 151 includes a hook, a hanging ring, or a latch to store the first outdoor tool 210. The second accessory storage portion 152 includes two fixing positions, the two fixing positions are spaced apart along the front and rear direction of the riding mower, and the fixing positions are used for supporting the second outdoor tool 220.

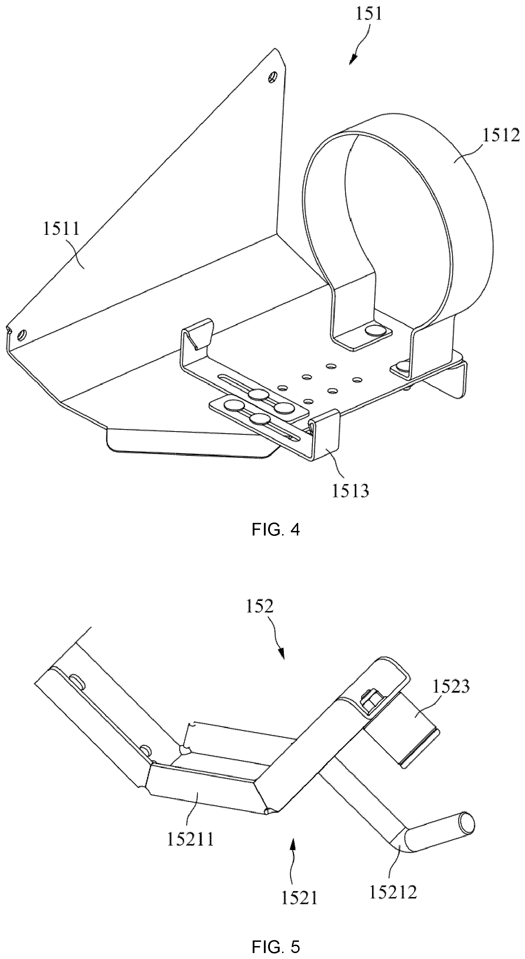

In an example, as shown in FIG. 4, the first accessory storage portion 151 includes a first connecting portion 1511 and a first hanging ring 1512. The first connecting portion 1511 is connected to the body 110. Specifically, the first connecting portion 1511 may be connected to the housing of the body 110. The first hanging ring 1512 is connected to the first connecting portion 1511. The first outdoor tool 210 is inserted through the first hanging ring 1512. The first outdoor tool 210 is detached or mounted in a linear direction. When the first outdoor tool 210 is a blower, part of the blower is larger than the inner diameter of the first hanging ring 1512. Thus, when the blower is inserted into the first hanging ring 1512 along a straight line, the first hanging ring 1512 can limit the position of the blower.

Specifically, the first connecting portion 1511 includes a first connecting plate and a first receiving plate. The first connecting plate is connected to the body 110, and the first hanging ring 1512 is connected to the first receiving plate. The first receiving plate may be a flat plate or a bent plate. The first connecting portion 1511 may be connected to the body 110 through screws, and the first hanging ring 1512 may be connected to the first connecting portion 1511 through screws.

The first accessory storage portion 151 further includes a first clamping portion 1513. The first clamping portion 1513 is connected to the first connecting portion 1511 and located on the same side as the first hanging ring 1512. The first clamping portion 1513 has a clamping cavity for clamping the first outdoor tool 210. The first clamping portion 1513 is located on the rear side of the first hanging ring 1512. When the first outdoor tool 210 is inserted into the first hanging ring 1512, the first outdoor tool 210 is smoothly inserted into the clamping cavity and is clamped by the first clamping portion 1513, thereby stably positioning the first outdoor tool 210.

Exemplarily, the first clamping portion 1513 includes two first clamping plates. One end of each of the two first clamping plates is connected to the first connecting portion 1511, and the other end of each of the two first clamping plates is bent into an elastic portion. The clamping cavity is formed between two elastic portions. The positions of the first clamping plates on the first connecting portion 1511 are adjustable so that the size of the clamping cavity is adjusted to be adapted to first outdoor tools 210 of different sizes. Each of the first clamping plates is connected to the first connecting portion 1511 through screws. An elongated hole is provided on each of the first clamping plates, and the screws pass through the elongated hole to be connected to the first connecting portion 1511 so that it is convenient to adjust the position of each of the first clamping plates.

Referring to FIG. 1 and FIGS. 5 to 9, the second accessory storage portion 152 includes two fixing positions. One fixing position is located at the front end of the riding mower, and the other fixing position is located at the rear end of the riding mower. When the outdoor tool is mounted, the front portion of the outdoor tool is placed into the fixing position at the front end, and then, the rear portion of the outdoor tool is mounted into the fixing position at the rear end.

A first support assembly 1521 is disposed in the fixing position at the front end. The first support assembly 1521 includes a first support frame 15211 and a first hook 15212. The first support frame 15211 is connected to the body 110. Specifically, the first support frame 15211 may be connected to the housing of the body 110. The first hook 15212 is disposed on the first support frame 15211. A second support assembly 1522 is disposed in the fixing position at the rear end. The second support assembly 1522 includes a second support frame 15221 and a second hook 15222. The second support frame 15221 is connected to the body 110. Specifically, the second support frame 15222 may be connected to the housing of the body 110. The second hook 15222 is disposed on the second support frame 15221. The second outdoor tool 220 is inserted through the first hook 15212 and the second hook 15222.

Specifically, the first hook 15212 and the second hook 15222 are each provided with a hooking slot. The opening of the hooking slot is upward. Only the pole of the outdoor tool needs to be placed into the hooking slot. When the second outdoor tool 220 is mounted, the front portion of the second outdoor tool 220 is placed onto the first hook 15212, and then, the rear portion of the second outdoor tool 220 is placed onto the second hook 15222.

Referring to FIG. 5, the second accessory storage portion 152 further includes a limiting member 1523. The limiting member 1523 is disposed in the hooking slot and encloses an introduction port and a limiting slot with the second hook 15222. When the outdoor tool is placed into the hooking slot, the outdoor tool is introduced into the limiting slot along the introduction port so that the position of the outdoor tool is limited.

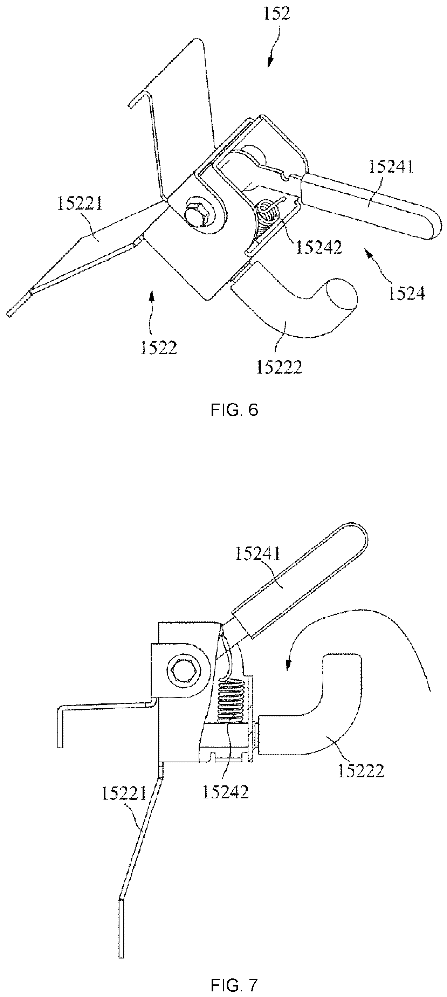

Referring to FIGS. 6 to 9, the biasing device 1524 includes a handle 15241 and a spring 15242. The outdoor tool pushes the handle 15241 in the process where the outdoor tool is mounted to the accessory storage portion 150. The spring 15242 drives the handle 15241 to return to the original position of the handle 15241 after the outdoor tool is mounted in place. The operator holds the outdoor tool and can place the outdoor tool on the support frame at the front end. Then, the operator pushes the handle 15241 with the outdoor tool and places the outdoor tool on the support frame at the rear end. Thus, the outdoor tool can be fixed. In the process where the outdoor tool pushes the handle 15241, the handle 15241 drives the spring 15242 to stretch. After the outdoor tool is placed on the support frame at the rear end, the handle 15241 returns to the original position of the handle 15241 under the action of the spring 15242. The arrow in FIG. 7 indicates the path along which the outdoor tool pushes the handle 15241 and is inserted into the hooking slot.

The outdoor tool pushes the handle 15241 in the process where the outdoor tool is fetched from the accessory storage portion 150. The spring 15242 drives the handle 15241 to return to the original position of the handle 15241 after the outdoor tool is fetched out. The handle 15241 cooperates with the spring 15242 so that the operator can mount and detach the outdoor tool with one hand.

The accessory storage portion 150 has fewer components. The length of the longest component among the components of the accessory storage portion 150 is less than or equal to 30 cm. Thus, the components have small volumes, thereby saving space and facilitating storage and transportation. Among components of the first accessory storage portion 151 such as the first connecting portion 1511 and the first hanging ring 1512, the length of the longest component is less than or equal to 30 cm. Among components of the second accessory storage portion 152 such as the first support frame 15211, the first hook 15212, the second support frame 15221, the second hook 15222, the limiting member 1523, the handle 15241, and the spring 15242, the length of the longest component is less than or equal to 30 cm.

In another example, as shown in FIGS. 10 to 13, the carrier 120 is the seat, and the riding mower further includes a rollover protection structure 160. The rollover protection structure 160 is disposed behind the seat. The accessory storage portion 150 is connected to the rollover protection structure 160, thereby making full use of space. Specifically, the first accessory storage portion 151 is fixedly mounted to the rollover protection structure 160.

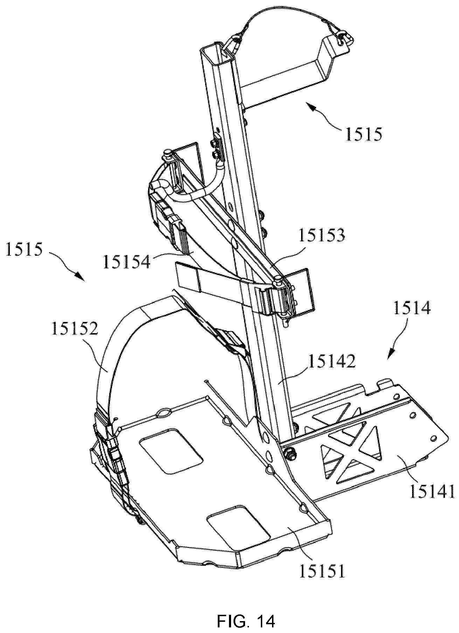

As shown in FIG. 14, the first accessory storage portion 151 includes a portion 1514 for fixation to a whole machine and an accessory mounting portion 1515. The portion 1514 for the fixation to the whole machine is fixedly mounted to the rollover protection structure 160. The accessory mounting portion 1515 is used for mounting the first outdoor tool 210.

The portion 1514 for the fixation to the whole machine includes two clamping plates 15141 clamping the rollover protection structure 160. The clamping plates 15141 are detachably connected to the rollover protection structure 160 through locking members so that it is convenient to mount and detach the clamping plates 15141. The portion 1514 for the fixation to the whole machine further includes a support column 15142. The clamping plates 15141 and the accessory mounting portion 1515 are each connected to the support column 15142.

The first accessory storage portion 151 may include one accessory mounting portion 1515 to store one first outdoor tool 210. The first accessory storage portion 151 may include two accessory mounting portions 1515, and each accessory mounting portion 1515 stores one first outdoor tool 210. Exemplarily, the first accessory storage portion 151 includes two accessory mounting portions 1515, and each accessory mounting portion 1515 stores one first outdoor tool 210. The two accessory mounting portions 1515 are distributed on two sides of the support column 15142 and may store both handheld and backpack blowers or store pruners, lights, or chainsaws.

The structure of the accessory mounting portion 1515 for storing the backpack blower may be constituted by a hook, a hanging ring, or a latch. The other accessory mounting portion 1515 includes an accessory receiving plate 15151 and a first locking strap 15152. The accessory receiving plate 15151 is connected to the portion 1514 for the fixation to the whole machine. Two ends of the first locking strap 15152 are each connected to the accessory receiving plate 15151. A first accommodating space enclosed between the first locking strap 15152 and the accessory receiving plate 15151 is used for accommodating the body of the first outdoor tool 210. The length of the first locking strap 15152 is adjustable so that it is convenient to lock the first outdoor tool 210. Specifically, the first locking strap 15152 may lock the body of the blower.

The accessory mounting portion 1515 further includes an accessory connecting plate 15153 and a second locking strap 15154. The accessory connecting plate 15153 is connected to the portion 1514 for the fixation to the whole machine. Two ends of the second locking strap 15154 are each connected to the accessory connecting plate 15153. A second accommodating space enclosed between the second locking strap 15154 and the accessory connecting plate 15153 is used for accommodating a grip of the first outdoor tool 210 or another component of the first outdoor tool 210. The length of the second locking strap 15154 is adjustable so that it is convenient to lock the first outdoor tool 210. Specifically, the second locking strap 15154 may lock a grip of the blower.

Referring to FIGS. 10 to 12, FIG. 15, and FIG. 16, the second accessory storage portion 152 includes two fixing positions. The fixing position at the front end is provided with a first connecting assembly 1525, and the fixing position at the rear is provided with a second connecting assembly 1526. The first connecting assembly 1525 and the second connecting assembly 1526 collectively support the second outdoor tool 220.

The first connecting assembly 1525 includes a first connecting frame 15251 and a first positioning member 15252. The first connecting frame 15251 is connected to the body 110, and the first positioning member 15252 is disposed on the first connecting frame 15251. The first positioning member 15252 has a first positioning slot, or the first positioning member 15252 and the first connecting frame 15251 encloses a first positioning slot. The first positioning slot is used for accommodating part of the second outdoor tool 220.

The second connecting assembly 1526 includes a second connecting frame 15261 and a second positioning member 15262. The second connecting frame 15261 is connected to the body 110, and the second positioning member 15262 is disposed on the second connecting frame 15261. The second positioning member 15262 has a second positioning slot, or the second positioning member 15262 and the second connecting frame 15261 encloses a second positioning slot. The second positioning slot is used for accommodating part of the second outdoor tool 220.

Both the first positioning slot and the second positioning slot have upward openings. Only the pole of the outdoor tool needs to be placed into the first positioning slot and the second positioning slot. The first positioning slot is enclosed by plates or rods, and the second positioning slot is enclosed by plates or rods. Protrusions are provided on the inner wall of the second positioning slot, performing the function of increasing a frictional force so that the position of the second outdoor tool 220 is limited.

The second connecting assembly 1526 further includes a limiting plate 15263. The limiting plate 15263 is disposed at the opening of the second positioning slot. One end of the limiting plate 15263 is rotatably connected to the second positioning member 15262. The second positioning slot can be opened or closed through the limiting plate 15263, thereby performing the function of limiting the position of the second outdoor tool 220. The limiting plate 15263 can be an elastic plate made of a plastic material. Alternatively, an elastic member is disposed between the limiting plate 15263 and the second positioning member 15262 to implement that the limiting plate 15263 returns to the original position of the limiting plate 15263.

When the second outdoor tool 220 is mounted, the front portion of the second outdoor tool 220 is placed into the first positioning slot. Then, the limiting plate 15263 is pushed through the rear portion of the second outdoor tool 220, and the rear portion of the second outdoor tool 220 is placed into the second positioning slot. The limiting plate 15263 returns to the original position of the limiting plate 15263 to limit the position of the second outdoor tool 220. In the process where the second outdoor tool 220 is fetched from the second accessory storage portion 152, the second outdoor tool 220 is lifted upwards so that the second outdoor tool 220 can push the limiting plate 15263. After the second outdoor tool 220 is fetched out, the limiting plate 15263 returns to the original position of the limiting plate 15263.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A stand-on mower, comprising:
a body;
a carrier used for carrying a user and disposed at a rear end of the body;
a walking assembly comprising walking wheels, wherein the walking wheels support the body and are used for driving the stand-on mower to walk; and
a cutting assembly comprising a mowing element for mowing grass, wherein the cutting assembly is mounted to the body;
wherein the stand-on mower further comprises:
a first accessory storage portion and a second accessory storage portion, wherein the first accessory storage portion and the second accessory storage portion are disposed on a left side of the body and a right side of the body, respectively, the first accessory storage portion and the second accessory storage portion have different structures, the first accessory storage portion is used for storing a first outdoor tool, and the second accessory storage portion is used for storing a second outdoor tool different from the first outdoor tool.

2. The stand-on mower according to claim 1, wherein the first outdoor tool and the second outdoor tool are each disposed along a front and rear direction, a battery pack of the first outdoor tool and/or a battery pack of the second outdoor tool are located at a rear of the first outdoor tool and/or a rear of the second outdoor tool, and a working head of the first outdoor tool and/or a working head of the second outdoor tool are located at a front of the first outdoor tool and/or a front of the second outdoor tool.

3. The stand-on mower according to claim 1, wherein a length of the first outdoor tool is greater than or equal to 70 cm; and/or a length of the second outdoor tool is greater than or equal to 70 cm.

4. The stand-on mower according to claim 1, wherein the first outdoor tool is a blower, a pruner, or a light.

5. The stand-on mower according to claim 1, wherein the second outdoor tool is a string trimmer or a pole saw.

6. The stand-on mower according to claim 1, wherein the first outdoor tool is operable by the user to enter or exit a working state; and/or the second outdoor tool is operable by the user to enter or exit a working state.

7. The stand-on mower according to claim 1, wherein a length of a longest component among components of the first accessory storage portion is less than or equal to 30 cm; and/or
a length of a longest component among components of the second accessory storage portion is less than or equal to 30 cm.

8. The stand-on mower according to claim 1, wherein the first accessory storage portion is detachably connected to the body; and/or the second accessory storage portion is detachably connected to the body.

9. The stand-on mower according to claim 1, further comprising a power supply interface, wherein the power supply interface is configured to supply power to the first outdoor tool and/or the second outdoor tool.

10. The stand-on mower according to claim 1, comprising a battery compartment for accommodating a battery pack, wherein the battery pack is detachably connected to the battery compartment, and the battery pack is capable of supplying power to the first outdoor tool and/or the second outdoor tool after being detached.

11. The stand-on mower according to claim 1, wherein an included angle between the first accessory storage portion and the body is adjustable to change a working angle of the first outdoor tool.

12. The stand-on mower according to claim 1, wherein the first outdoor tool and/or the second outdoor tool is operable by the user to change a working parameter.

13. The stand-on mower according to claim 1, wherein the second accessory storage portion comprises a biasing device, and the biasing device limits a position of the second outdoor tool when the second outdoor tool is mounted to the second accessory storage portion.

14. The stand-on mower according to claim 13, wherein the biasing device comprises a handle and a spring, wherein the second outdoor tool pushes the handle in a process where the second outdoor tool is mounted to the second accessory storage portion, and the spring drives the handle to return to an original position of the handle after the second outdoor tool is mounted in place.

15. The stand-on mower according to claim 13, wherein the second accessory storage portion comprises at least two fixing positions, the fixing positions are spaced apart along a front and rear direction of the stand-on mower, and the fixing positions are used for supporting the second outdoor tool.

## Amended claims

### Amended claims in accordance with Rule 137(2) EPC.

1. A stand-on mower, comprising:
a body (110);
a carrier (120) used for carrying a user and disposed at a rear end of the body (110);
a walking assembly (130) comprising walking wheels (131), wherein the walking wheels (131) support the body (110) and are used for driving the stand-on mower to walk; and
a cutting assembly (140) comprising a mowing element (141) for mowing grass, wherein the cutting assembly (140) is mounted to the body (110);
wherein the stand-on mower further comprises:
a first accessory storage portion (151) and a first outdoor tool (210) stored in the first accessory storage portion (151), **characterized in that**
the stand-on mower further comprises a second accessory storage portion (152) and a second outdoor tool (220) stored in the second accessory storage portion (152), wherein the second outdoor tool (220) is different from the first outdoor tool (210), wherein the first accessory storage portion (151) and the second accessory storage portion (152) are disposed on a left side of the body (110) and a right side of the body (110), respectively, and the first accessory storage portion (151) and the second accessory storage portion (152) have different structures.

2. The stand-on mower according to claim 1, wherein the first outdoor tool (210) and the second outdoor tool (220) are each disposed along a front and rear direction, a battery pack of the first outdoor tool (210) and/or a battery pack of the second outdoor tool(220) are located at a rear of the first outdoor tool (210) and/or a rear of the second outdoor tool (220), and a working head of the first outdoor tool (210) and/or a working head of the second outdoor tool (220) are located at a front of the first outdoor tool (210) and/or a front of the second outdoor tool (210).

3. The stand-on mower according to claim 1, wherein a length of the first outdoor tool (210) is greater than or equal to 70 cm; and/or a length of the second outdoor tool (220) is greater than or equal to 70 cm.

4. The stand-on mower according to claim 1, wherein the first outdoor tool (210) is a blower, a pruner, or a light.

5. The stand-on mower according to claim 1, wherein the second outdoor tool (220) is a string trimmer or a pole saw.

6. The stand-on mower according to claim 1, wherein the first outdoor tool (210) is operable by the user to enter or exit a working state; and/or the second outdoor tool (220) is operable by the user to enter or exit a working state.

7. The stand-on mower according to claim 1, wherein a length of a longest component among components of the first accessory storage portion (151) is less than or equal to 30 cm; and/or
a length of a longest component among components of the second accessory storage portion (152) is less than or equal to 30 cm.

8. The stand-on mower according to claim 1, wherein the first accessory storage portion (151) is detachably connected to the body (110); and/or the second accessory storage portion (152) is detachably connected to the body (110).

9. The stand-on mower according to claim 1, further comprising a power supply interface, wherein the power supply interface is configured to supply power to the first outdoor tool (210) and/or the second outdoor tool (220).

10. The stand-on mower according to claim 1, comprising a battery compartment for accommodating a battery pack, wherein the battery pack is detachably connected to the battery compartment, and the battery pack is capable of supplying power to the first outdoor tool (210) and/or the second outdoor tool (220) after being detached.

11. The stand-on mower according to claim 1, wherein an included angle between the first accessory storage portion (151) and the body (110) is adjustable to change a working angle of the first outdoor tool (210).

12. The stand-on mower according to claim 1, wherein the first outdoor tool (210) and/or the second outdoor tool (220) is operable by the user to change a working parameter.

13. The stand-on mower according to claim 1, wherein the second accessory storage portion (152) comprises a biasing device (1524), and the biasing device (1524) limits a position of the second outdoor tool (220) when the second outdoor tool (220) is mounted to the second accessory storage portion (152).

14. The stand-on mower according to claim 13, wherein the biasing device (1524) comprises a handle (15241) and a spring (15242), wherein the second outdoor tool (220) pushes the handle (15241) in a process where the second outdoor tool (220) is mounted to the second accessory storage portion (152), and the spring (15242) drives the handle (15241) to return to an original position of the handle (15241) after the second outdoor tool (220) is mounted in place.

15. The stand-on mower according to claim 13, wherein the second accessory storage portion (152) comprises at least two fixing positions, the fixing positions are spaced apart along a front and rear direction of the stand-on mower, and the fixing positions are used for supporting the second outdoor tool (220).
